# EUROPÄISCHE PATENTANMELDUNG

(11) **EP 2 026 436 A2**
(43) Veröffentlichungstag der Anmeldung: **18.02.2009**
(21) Anmeldenummer: 08011476.2
(22) Anmeldetag: 25.06.2008
(51) Int. Cl.: H02G 5/02

(54) **Isolierprofil**

(30) Priorität: 24.07.2007 DE 102007034930
(71) Anmelder: REHAU AG + Co, 95111 Rehau (DE)
(72) Erfinder: Herrmann, Jürgen, 95185 Gattendorf (DE); Hermann, Andreas, 95111 Rehau (DE); Engelhardt, Dieter, 95179 Geroldsgrün (DE); Gebhardt, Dieter, 95194 Regnitzlosau (DE)

(57) **Zusammenfassung**

Die Erfindung betrifft ein Isolierprofil (3) für eine Stromschiene (1) mit einem zwei Schenkel (9) aufweisenden Grundkörper (4) und mindestens einem an einem der beiden Schenkel (9) befestigten Element (5) aus elektrisch leitfähigem Material. Erfindungsgemäß weist der Grundkörper (4) ein die beiden Schenkel (9) miteinander verbindendes Scharnier (6) auf, so dass er mittels einer Scharnierbewegung verformbar ist. Gegenstand der Erfindung ist auch eine Stromschiene (1) mit einem derartigen Isolierprofil (3).

## Beschreibung

Die Erfindung betrifft ein Isolierprofil für eine Stromschiene mit einem zwei Schenkel aufweisenden Grundkörper und mindestens einem an einem der beiden Schenkel befestigten Element aus elektrisch leitfähigem Material.

Bei den in der Praxis bekannten Isolierprofilen mit den eingangs beschriebenen Merkmalen werden im Allgemeinen die Profile seitlich in einen zum Beispiel aus Aluminium bestehenden Aufnahmekörper der Stromschiene eingeschoben. Dies hat aufgrund des vorhandenen Reibungswiderstandes den Effekt, dass es mit zunehmender Einschublänge des Isolierprofils immer schwieriger wird, den Montagevorgang fortzusetzen. Die konfektionierbare Länge von Stromschienen-Isolierprofilen ist hierdurch begrenzt. Darüber hinaus ist das bekannte Verfahren mit einem hohen zeitlichen Aufwand verbunden und entsprechend teuer.

Es ist außerdem bereits bekannt, ein U-förmiges Aluminiumprofil als Aufnahmekörper vorzusehen, wobei innerhalb dieses Profils als Vorsprünge ausgebildete Verrasterungen vorgesehen sind, auf die ein im Querschnitt H-förmiges Isolierprofil montiert wird. Aufgrund der vorhandenen Elastizität des Isolierprofils kann dieses über eine geringfügige Deformation auf das Aluminiumprofil aufgeclipst werden. Das H-förmige Isolierprofil ist vergleichsweise aufwändig in der Herstellung und erfordert darüber hinaus eine nicht kompakte Ausführung der Aluminiumschiene.

Vor diesem Hintergrund besteht die der Erfindung zugrunde liegende Aufgabe darin, ein Isolierprofil für eine Stromschiene anzugeben, welches kostengünstig herstellbar, platzsparend und dabei gleichzeitig leicht montierbar ist.

Erfindungsgemäß wird die Aufgabe durch ein Isolierprofilen mit den Merkmales gemäß Anspruch 1 gelöst. Erfindungsgemäß kann der Grundkörper mit Hilfe der Scharnierbewegung zusammengedrückt und damit quer zur Profillängsrichtung in einen Aufnahmekörper der Stromschiene eingeführt werden. Hierdurch entfällt der aufwändige und nur bis zu einer begrenzten Länge durchführbare Einschubvorgang.

Aufgrund der Scharnierfunktion kann der erfindungsgemäße Grundkörper mittels eines vergleichsweise einfachen Extrusionsverfahrens hergestellt werden und erlaubt gleichzeitig eine platzsparende Ausbildung der Stromschiene. Die Befestigung des Elementes aus elektrisch leitfähigem Material an einem der beiden Schenkel erlaubt eine einfache Montage des Profils in der Stromschiene. Das Element ist hierbei vorzugsweise vom Scharnier beabstandet angeordnet.

Vorzugsweise weist der Grundkörper Rastvorsprünge auf, so dass er in dem Aufnahmekörper der Stromschiene einclipsbar ist. Dies gewährleistet eine exakte Positionierung des Grundkörpers im Aufnahmekörper und verhindert bei einer Überkopf-Montage gleichzeitig zuverlässig ein Herausfallen des Isolierprofils aus dem Aufnahmekörper. Gemäß einer bevorzugten Ausführungsform der Erfindung ist der Grundkörper einstückig ausgebildet und das Scharnier ist als Filmscharnier in den Grundkörper integriert. Während des Verformens des Grundkörpers über die Scharnierbewegung wird das Filmscharnier unter eine Vorspannung gesetzt, die ein sicheres Anliegen des Grundkörpers am Aufnahmekörper im montierten Zustand gewährleistet.

Die Schenkel des Grundkörpers können im Entspannungszustand des Grundkörpers einen Winkel im Bereich von 60° bis 180°, vorzugsweise 90° bis 150° miteinander einschließen. Die Schenkel können im Bereich ihres dem Scharnier zugewandten Endes jeweils einen Vorsprung aufweisen. Die beiden Vorsprünge definieren im zusammengedrückten Einbauzustand des Grundkörpers, in dem sie vorzugsweise aneinander anliegen, einen Minimalabstand zwischen den beiden anderen Enden der Schenkel. Hierdurch ist gewährleistet, dass ein Luftspalt mit definierter Breite zwischen den beiden Innenseiten der Schenkel verbleibt, in die die Kontaktvorrichtung für das elektrisch leitfähige Element eingeführt werden kann. Vorzugsweise definieren die beiden Vorsprünge und das Scharnier im eingebauten Zustand gemeinsam einen vorzugsweise geschlossenen Hohlraum, welcher insbesondere eine zusätzliche Isolierfunktion besitzt.

Um eine sichere Befestigung des Isolierprofils am Aufnahmekörper der Stromschiene sicherzustellen, kann der Grundkörper ferner randseitige Haken aufweisen, die in entsprechende Ausnehmungen am Aufnahmekörper einführbar sind.

Gegenstand der Erfindung ist außerdem eine Stromschiene mit einem Isolierprofil gemäß Anspruch 8.

Im Folgenden wird die Erfindung anhand einer lediglich ein Ausführungsbeispiel darstellenden Zeichnung ausführlich erläutert. Es zeigen schematisch:
- Fig. 1a, b: jeweils ein erfindungsgemäßes Isolierprofil für eine Stromschiene im eingebauten Zustand,
- Fig. 2a, b: Einzeldarstellungen der Isolierprofile in Fig. 1 a, b im Montagezustand,
- Fig. 3a, b: die in Fig. 2a, b dargestellten Isolierprofile jeweils im Entspannungs- zustand und
- Fig. 4a bis 5c: weitere Ausführungsformen der erfindungsgemäßen Lehre.

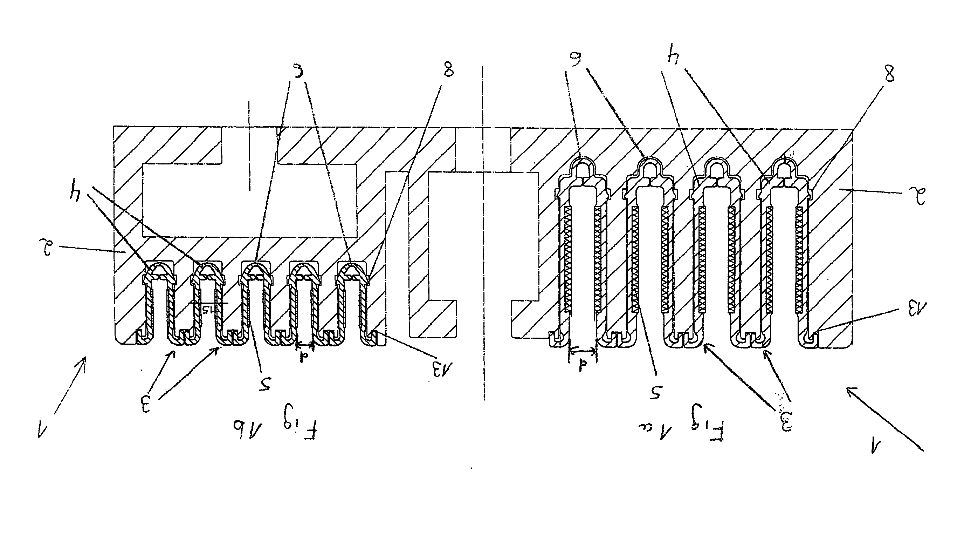

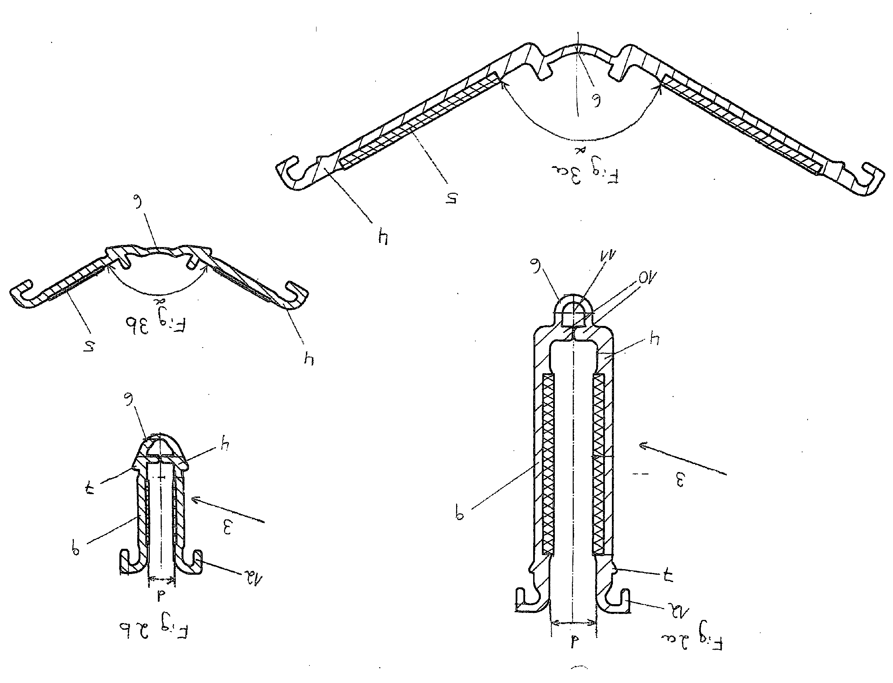

Die Fig. 1a und 1b zeigen jeweils eine Stromschiene 1 mit einem Aufnahmekörper 2 aus Aluminium und mehreren Isolierprofilen 3. Die Isolierprofile 3 weisen jeweils einen Grundkörper 4 aus Kunststoff, bspw. aus PVC oder PC+ABS, und zwei an dem Grundkörper 4 befestige Elemente 5 aus elektrisch leitfähigem Material - z.B. Kupfer - auf, durch die der Strom hindurchgeleitet wird. Die Grundkörper 4 sind jeweils mit einem Scharnier 6 versehen. Insbesondere einer vergleichenden Betrachtung der Fig. 2a und 3a bzw. 2b und 3b ist zu entnehmen, dass die Grundkörper 4 mittels einer Scharnierbewegung verformbar und hierdurch senkrecht zur Profillängsrichtung in den Aufnahmekörper 2 einbringbar sind. Die Grundkörper 4 weisen Rastvorsprünge 7 auf, die im Montagezustand in entsprechende Ausnehmungen 8 im Aufnahmekörper 2 eingreifen, so dass ein Einclipsen der Grundkörper 4 in den Aufnahmekörper 2 möglich ist.

In allen Ausführungsbeispielen (Fig. 1a bis Fig. 5c) sind die Kunststoff-Grundkörper 4 jeweils einstückig ausgebildet und in einem einzigen Extrusions-Arbeitsschritt hergestellt worden, bei dem die elektrisch leitfähigen Elemente 5 entsprechend umspritzt worden sind. Die Scharniere 6 sind hierbei als Filmscharniere in die Grundkörper 4 integriert. Die Fig. 3a, 3b, 4b und 5b offenbaren jeweils den Grundkörper 4 in seinem Entspannungszustand. Die Grundkörper 4 weisen jeweils zwei durch das Filmscharnier 6 miteinander verbundene Schenkel 9 auf, die im Entspannungszustand einen Winkel α von ca. 120° miteinander einschließen. An den beiden Schenkeln 9 ist jeweils ein Element 5 befestigt, wobei diese vom jeweiligen Scharnier 6 beabstandet angeordnet sind.

Bei den Ausführungsbeispielen gemäß den Fig. 1a bis 3b weisen die Schenkel 9 an ihrem dem Scharnier 6 zugewandten Ende jeweils einen Vorsprung 10 auf. Die beiden Vorsprünge 10 definieren hierbei im eingebauten Zustand einen Minimalabstand d zwischen den beiden anderen Enden der Schenkel 9. Hierdurch wird ein definierter Freiraum zwischen den beiden elektrisch leitfähigen Elementen 5 eines jeden Isolierprofils 3 definiert. Im eingebauten Zustand definieren die beiden Vorsprünge 10 und das Scharnier 6 gemeinsam ferner einen Hohlraum 11, welcher eine zusätzliche Isolierwirkung aufweist.

In den Ausführungsbeispielen gemäß den Fig. 1a bis 4c weisen die Grundkörper 4 außerdem randseitige Haken 12 auf, die in entsprechende Montage-Ausnehmungen 13 an dem Aufnahmekörper 2 der Stromschiene 1 einführbar sind.

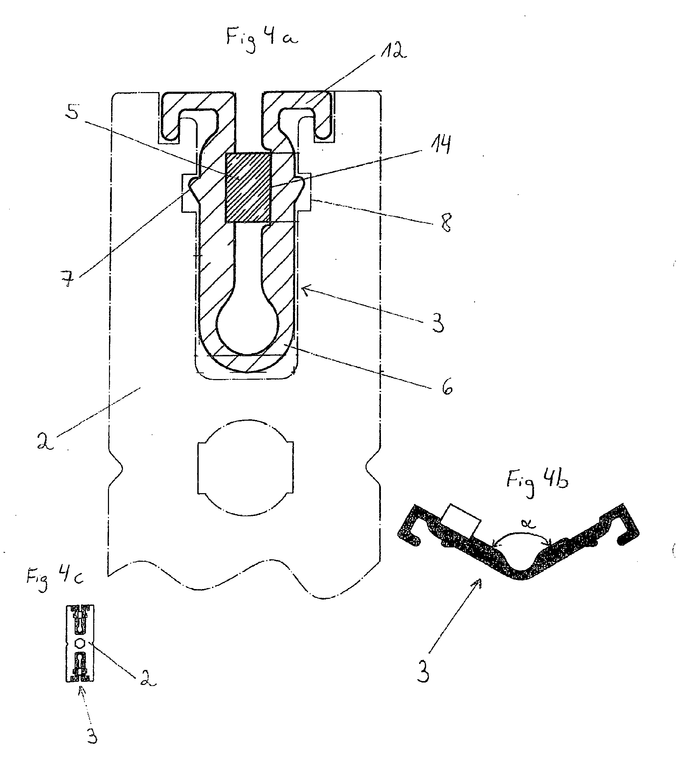

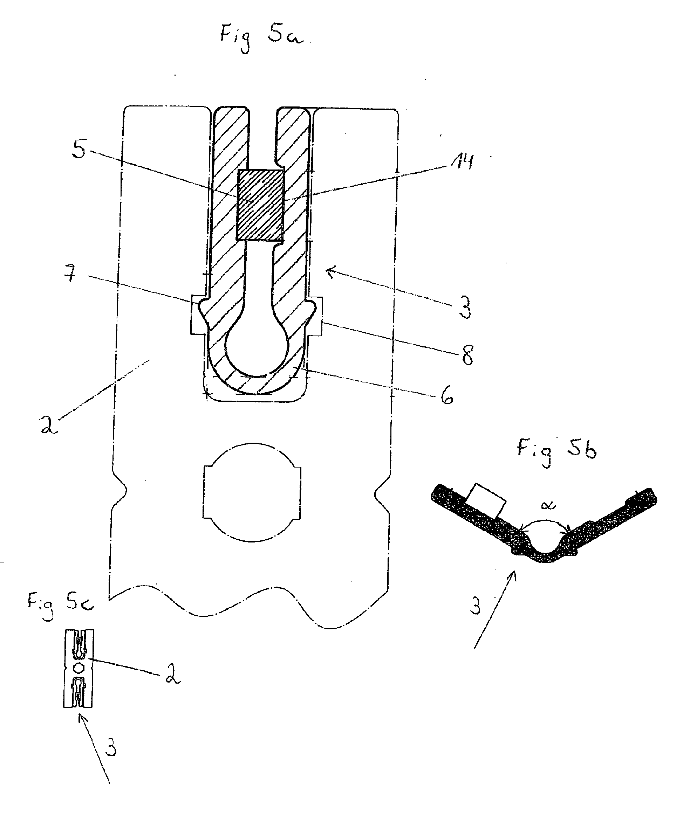

Die Ausführungsbeispiele gemäß den Fig. 4a bis 5c zeigen Isolierprofile 3 mit jeweils nur einem elektrisch leitfähigen Element 5. Dieses Element 5 ist an einem Schenkel 9 des Grundkörpers 4 befestigt und liegt im montierten Zustand am anderen Schenkel 9' des Grundkörpers 4 an. Dieser verfügt über eine entsprechende Anschlags-Ausnehmung 14, so dass ein exakt definierter Montagezustand sichergestellt ist. Die Darstellungen Fig. 4c und 5c zeigen jeweils einen Aufnahmekörper 2, der sowohl ober- als auch unterseitig mit einem Isolierprofil 3 und entsprechenden elektrisch leitfähigen Elementen 5 versehen ist.

Bei der Montage der Isolierprofile 3 an dem Aufnahmekörper 2 werden die in den Fig. 3a, 3b, 4b und 5b dargestellten Isolierprofile 3 im Entspannungszustand über eine Scharnierbewegung derart verformt, dass sie den in den Fig. 2a, 2b, 4a bzw. 5a dargestellten Zustand einnehmen. In diesem Zustand können die Grundkörper 4 aus Kunststoff dann senkrecht zur Profillängsrichtung in den Aufnahmekörper 2 eingeführt werden, so dass ein zeit-und kostenintensives seitliches Einschieben der Isolierkörper 3 in den Aufnahmekörper 2 nicht mehr erforderlich ist.

## Patentansprüche

1. Isolierprofil (3) für eine Stromschiene (1) mit
- einem zwei Schenkel (9) aufweisenden Grundkörper (4),
- mindestens einem an einem der beiden Schenkel (9) befestigten Element (5) aus elektrisch leitfähigem Material,
wobei der Grundkörper (4) ein die beiden Schenkel (9) miteinander verbindendes Scharnier (6) aufweist, so dass er mittels einer Scharnierbewegung verformbar ist.

2. Isolierprofil (3) nach Anspruch 1, **dadurch gekennzeichnet, dass** der Grundkörper (4) Rastvorsprünge (7) aufweist, so dass er in einen Aufnahmekörper (2) der Stromschiene (1) einclipsbar ist.

3. Isolierprofil (3) nach Anspruch 1 oder 2, **dadurch gekennzeichnet, dass** der Grundkörper (4) einstückig ausgebildet ist, in den das Scharnier (6) als Filmscharnier integriert ist.

4. Isolierprofil (3) nach einem der Ansprüche 1 bis 3, **dadurch gekennzeichnet, dass** die Schenkel (9) im Entspannungszustand des Grundkörpers (4) einen Winkel im Bereich von 60° bis 180 °, vorzugsweise 90° bis 150°, miteinander einschließen.

5. Isolierprofil (3) nach einem der Ansprüche 1 bis 4, **dadurch gekennzeichnet, dass** die Schenkel (9) im Bereich ihres dem Scharnier (6) zugewandten Endes jeweils einen Vorsprung (10) aufweisen und die beiden Vorsprünge (10) einen Minimalabstand (d) zwischen den beiden anderen Enden der Schenkel (9) definieren.

6. Isolierprofil (3) nach Anspruch 5, **dadurch gekennzeichnet, dass** die beiden Vorsprünge (10) und das Scharnier (6) im eingebauten Zustand gemeinsam einen Hohlraum (11) definieren.

7. Isolierprofil (3) nach einem der Ansprüche 1 bis 6, **dadurch gekennzeichnet, dass** der Grundkörper (4) randseitige Haken (12) aufweist, die in entsprechende Montage-Ausnehmungen (13) an einem Aufnahmekörper (2) der Stromschiene (1) einführbar sind.

8. Stromschiene (1) mit einem Isolierprofil (3) nach einem der Ansprüche 1 bis 7.
